Europäisches Patentamt

European Patent Office

Office européen des brevets

(11) Veröffentlichungsnummer: **0 200 888**
**A2**

# (12) EUROPÄISCHE PATENTANMELDUNG

(21) Anmeldenummer: **86103398.3**

(22) Anmeldetag: **13.03.86**

(51) Int. Cl.⁴: **B65G 47/26**

(30) Priorität: **15.04.85 DE 8511014 U**

(43) Veröffentlichungstag der Anmeldung:
**17.12.86 Patentblatt 86/46**

(84) Benannte Vertragsstaaten:
**AT BE CH DE FR GB IT LI LU NL SE**

(71) Anmelder: **Interroll Fördertechnik GmbH & Co.
KG
Postfach
D-5632 Wermelskirchen 2(DE)**

(72) Erfinder: **vom Stein, Hans
Neuenweg 63
D-5632 Wermelskirchen 3(DE)**

(74) Vertreter: **Patentanwälte Müller-Boré, Deufel,
Schön, Hertel, Lewald, Otto
Postfach 26 02 47 Isartorplatz 6
D-8000 München 26(DE)**

(54) **Vorrichtung zur akkumulierenden Förderung von Gütern.**

㉗ Bei der Vorrichtung zur akkumulierenden Förderung von Gütern, die in Form einer Rollenbahn mit Rollen (10, 12) ausgebildet ist und bei welcher eine über aufblasbare Schlauchabschnitte (42) eine Kette (28) mit den zu fördernden Gütern in Angriff bringbar ist, ist zwischen der Kette (28) und jedem Schlauchabschnitt (42) ein Trag-und Führungsprofil für die Kette (28) in einem U-Profil (14) angeordnet. Das Trag-und Führungsprofil (62) ist in Form eines Kammes mit Zinken (64) ausgebildet, wobei zwischen jeweils zwei Zinken (64) die die Rollen (10, 12) tragenden Achszapfen (16, 18) aufgenommen werden können. Durch diese Anordnung kann das U-Profil (14) sehr schmal ausgebildet werden.

EP 0 200 888 A2

FIG.1

## Vorrichtung zur akkumulierenden Förderung von Gütern

Die Erfindung betrifft eine Vorrichtung zur akkumulierenden Förderung von Gütern, mit einer Rollenbahn, mit einer über aufblasbare Schlauchabschnitte mit den zu fördernden Gütern in Angriff bringbare Kette, wobei zwischen der Kette und jedem Schlauchabschnitt ein Trag-und Führungsprofil angeordnet ist und die Kette, die Trag-und Führungsprofile und die Schlauchabschnitte in einem nach oben hin offenen U-Profil angeordnet sind.

Derartige Förderer dienen insbesondere dazu, in gleichartigen Kisten oder auf gleichartigen Paletten angeordnete Güter auf einer Rollenbahn zu transportieren, wobei sich die Güter vom Anfang der Rollenbahn her aufstauen und beispielsweise von einem Stapler abgenommen werden können. Sobald die erste Kiste oder die erste Palette von der Rollenbahn entnommen ist, werden die nachfolgenden Güter um einen Abschnitt weiter befördert und neue Güter werden soweit transportiert bis sie den ersten unbesetzten Abschnitt erreicht haben.

Es ist bekannt, die Rollen der Rollenbahn zweizuteilen, d.h. jeweils zwei fluchtende Rollen sind mit einem Ende am Seitenrahmen der Rollenbahn und mit dem inneren Ende über einseitig gelagerte Achsstummel an einem mittig in der Rollenbahn verlaufenden U-Profil befestigt. In diesem U-Profil ist eine Kette angebracht, die während des Betriebs der Rollenbahn ständig angetrieben ist und an den Enden der Rollenbahn umgelenkt wird. Zum Fördern der Güter wird die Kette abschnittsweise über Schlauchabschnitte und zwischen den Schlauchabschnitten und der Kette angeordneten Trag-und Führungsprofilen angehoben, damit die Kette an der Unterseite der zu fördernden Kisten oder Paletten angreifen kann. Bei diesen bekannten Vorrichtungen ist das in der Mitte angeordnete U-Profil sehr breit ausgebildet, um die Achsstummel zur Lagerung der Rollen und die dazwischen angeordneten Trag-und Führungsprofile aufzunehmen.

Der Erfindung liegt die Aufgabe zugrunde, eine gattungsgemäße Vorrichtung so auszugestalten, daß der aus Kette, lauchabschnitten und Trag-und Führungsprofilen bestehende Antrieb kompakter und sicherer ist und die Lagerung der Rollen verbessert wird.

Die Lösung dieser Aufgabe wird erfindungsgemäß dadurch erreicht, daß das Trag-und Führungsprofil als Kammprofil ausgebildet ist und daß die Zinken nach unten zu dem Schlauchabschnitt gerichtet sind. Bei einem derart ausgebildeten Trag-und Führungsprofil ergibt sich erfindungsgemäß der große Vorteil, daß die zur Lagerung der Rollen an dem U-Profil angeordneten Achsstummel als das U-Profil durchsetzende Zapfen ausgebildet werden können, deren Enden zur Lagerung der Rollen seitlich aus dem U-Profil herausstehen. In den Zwischenräumen zwischen jeweils zwei benachbarten Zinken des Trag-und Führungsprofils können die Achszapfen aufgenommen werden, sodaß das U-Profil mit geringerer Breite ausgebildet werden kann, da das Trag-und Führungsprofil nicht zwischen den Enden zweier Achsstummel verlaufen muß.

Gemäß einer bevorzugten Ausführungsform sind die Zinken doppelwandig ausgebildet und die Basisfläche zwischen den Zinken ist ausgerundet. Durch diese Ausbildung wird Material und Gewicht bei dem Trag-und Führungsprofil eingespart und durch die Ausrundung kann sich das Trag-und Führungsprofil gut auf die Achszapfen auflegen, wenn durch den Schlauch kein Anheben des Profils erfolgt. Dadurch wird gleichzeitig erreicht, daß bei nicht aufgeblasenem Schlauch das Trag-und Führungsprofil, das auf den Achszapfen aufsitzt, den Schlauch nicht belastet.

In weiterer Ausbildung sind an der den Zinken gegenüberliegenden Oberfläche des Trag-und Führungsprofils Seitenschenkel angeordnet, welche vorzugsweise nach außen einfach oder doppelt umgebogen sein können. Diese Seitenschenkel verbessern die Seitenführung des Trag-und Führungsprofils während des Betriebs, d.h. während des Anhebens und Absenkens der Kette.

Ferner ist vorzugsweise an der den Zinken gegenüberliegenden Oberfläche, also zwischen den Seitenschenkeln, in der Mitte eine Kettenführung an dem Trag-und Führungsprofil angeordnet, die vorzugsweise aus einer im Querschnitt rechteckigen Rippe besteht, sodaß die Rollen der Kette auf dieser Rippe aufliegen und die verbindenden Kettenglieder seitlich vorbeistreichen.

Um eine Art Transportsicherung zu erbringen sind in Ausgestaltung der Erfindung an den Enden der Zinken Noppen angeordnet, so daß die Trag-und Führungsprofile mit den Achszapfen eine Art Schnappsitz erbringen. Damit wird verhindert, daß beim Transport oder Einbau der Abschnitte die Trag-und Führungsprofile aus dem U-Profil fallen können.

Um die Verbindung zweier benachbarter Trag-und Führungsprofile fließend zu gestalten,ist vorzugsweise jedes Trag-und Führungsprofil zur Ausbildung von Überlappungsstößen an einem Ende verjüngt und am anderen Ende mit einer inneren Ausnehmung ausgebildet, so daß ein Ende des Trag-und Führungsprofils ein Ende eines anderen Trag-und Führungsprofils übergreift, während das andere Ende des ersten Trag-und Führungsprofils seinerseits übergriffen wird.

Um zu vermeiden, daß bei der Anordnung der Achszapfen beim Anziehen der Befestigungsmuttern eine Verformung des U-Profils eintritt sind vorzugsweise auf den Achszapfen im Inneren des U-Profils Abstandsbuchsen angeordnet, die mit ihren Stirnflächen gegen die Innenflächen des U-Profils anstehen.

In Weiterbildung der Erfindung ist zwischen jedem Trag-und Führungsprofil und dem zugehörigen Schlauchabschnitt eine Metallschiene angeordnet, so daß die Zinkenenden auf dieser Metallschiene aufstehen und eine Beschädigung des Schlauches vermieden wird. Die Schlauchabschnitte liegen auf U-Profilen auf, die mit ihrer Öffnung nach unten gerichtet auf der Basis des durchgehenden U-Profils angeordnet sind. Innerhalb dieser die Schlauchabschnitte tragenden U-Profile sind auf der Basis des durchgehenden U-Profils Kettenführungsprofile angeordnet, um das Untertrum der umlaufenden Kette zu führen. Diese Kettenführungsprofile weisen vorzugsweise eine im Querschnitt rechteckige Rippe auf, auf welcher die Rollen der Kette gleiten.

Gemäß einer bevorzugten Ausführungsform sind die Trag-und Führungsprofile und die Kettenführungsprofile aus Kunststoff und insbesondere aus Nylon. Um eine Führung für die auf den umgekehrt angeordneten U-Profilen vorgesehenen Schlauchabschnitte zu erbringen, weisen die Schlauchabschnitte an den Enden nach oben hin abragende Führungszapfen auf, die zwischen Zinken des Trag-und Führungsprofils aufgenommen sind.

Ausführungsbeispiele der Erfindung werden nachstehend anhand der Zeichnung erläutert. Es zeigt:

Fig. 1 einen Abschnitt des Antriebs eines akkumulierenden Förderers im Schnitt,

Fig. 2 einen Schnitt gemäß der Linie II-II von Fig. 1,

Fig. 3 einen Schnitt durch den Antrieb einer abgewandelten Ausführungsform eines akkumulierenden Förderers,

Fig. 4 einen Schnitt gemäß der Linie IV-IV von Fig. 3 und

Fig. 5 einen Schnitt gemäß der Linie V-V von Fig. 3.

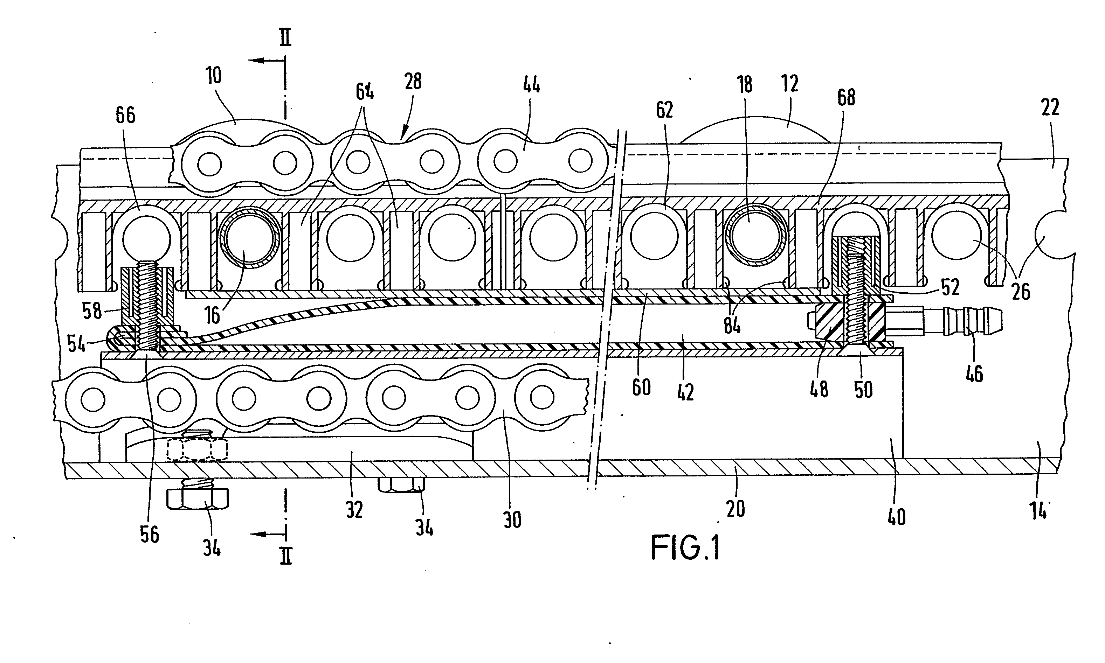

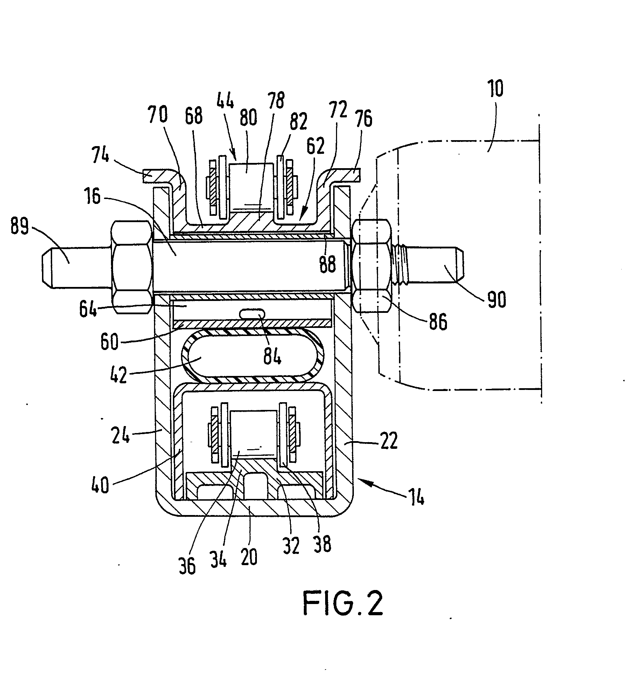

Fig. 1 zeigt einen Antriebsabschnitt eines akkumulierenden Förderers. Rollen 10, 12, die zwischen einem nicht dargestellten Seitenholm des Rahmens der Rollenbahn und einem in der Mitte angeordneten U-Profil 14 gelagert sind, sind angedeutet. Die Rolle 10 ist auf einer Achse 16 und die Rolle 12 auf einer Achse 18 gelagert. Das U-Profil 14 ist derart angeordnet, daß von der untenliegenden Basis 20 Seitenschenkel 22 und 24 nach oben gerichtet sind. In den Seitenschenkeln sind in vorgegebenem Abstand Bohrungen 26 angeordnet, welche der Befestigung von Rollen dienen. Zum Antrieb der auf den Rollen 10 und 12 transportierten,nichtdargestellten Gütern ist eine endlose, über die gesamte Länge der Rollenbahn umlaufende Kette 28 vorgesehen. Das Untertrum 30 der Kette 28 verläuft über der Basis 20. Zur Führung des Untertrums 30 sind Kettenführungsprofile 32 über Schrauben 34 auf der Basis 20 des U-Profils 14 befestigt. Die Kettenführungsprofile 32 sind nicht über die gesamte Länge des U-Profils 14 durchgehend sondern weisen eine geeignete Länge auf. Wie aus Fig. 2 zu ersehen ist, ist an der Oberseite jedes Kettenführungsprofils 32 eine im Querschnitt rechteckige Rippe 34 angeordnet, auf welcher die Rollen 36 der Kette gleiten, wobei die Kettenglieder 38 seitlich an der Rippe 34 geführt werden.

Die Kettenführungsprofile 32 und das Untertrum 30 der Kette 28 werden abgedeckt von U-Profilabschnitten 40, deren Öffnung nach unten zu der Basis 20 des U-Profils 14 gerichtet ist. Die U-Profilabschnitte 40 tragen Schlauchabschnitte 42, mit deren Hilfe das Obertrum 44 der Kette 28 abschnittsweise angehoben werden kann, wenn über eine nicht dargestellte Leitung, die an einer Anschlußtülle 46 angeschlossen ist, Druckluft in das Innere des Schlauchabschnitts 42 gepreßt wird. Die Tülle 46 ist in einem Verschlußstück 48 eingesetzt, das das vordere Ende des Schlauches verschließt. Dazu ist eine Schraube 50 durch die Basis des U-Profils 40 und das Verschlußstück 48 geführt. An der Oberseite des Schlauchstückes 42 ist die Schraube 50 in einen Zapfen 52 eingeschraubt, der die Schlauchwandung gegen das Verschlußstück 48 preßt und damit den Schlauch verschließt. Das hintere Ende 54 des Schlauches 42 ist umgefaltet. Eine durch die Basis des U-Profils 40 verlaufende Schraube 56 ist in einen Zapfen 58 eingeschraubt, womit das Ende 54 luftdicht zusammengepreßt wird.

Auf der Oberseite des Schlauchstückes 42 ist eine Metallschiene 60 aufgelegt. Auf dieser Metallschiene 60 steht ein Trag-und Führungsprofil 62 auf, auf dessen Oberseite das Obertrum 44 der Kette 28 läuft. Das Trag-und Führungsprofil 62 ist als Kammprofil ausgebildet und weist Zinken 64 auf, die zur Einsparnis von Material und Gewicht doppel wandig ausgebildet sind. Der Abstand zweier Zinken ist gleich dem Abstand zweier Löcher 26, so daß das Trag-und Führungsprofil 62 angeordnet werden kann unabhängig von dem Abstand der Rollen 10 und 12. Bei angeordnetem Trag-und Führungsprofil 62 verlaufen die Achs-zapfen 16 und 18 für die Rollen 10 und 12 und deren zwischen dem gegenüberliegenden Holm des Tragrahmens und dem U-Profil 14 angeordnete entsprechende Rollen zwischen zwei Zinken 64. Dazu ist die Basisfläche 66 zwischen zwei Zinken 64 vorzugsweise ausgerundet, so daß sich das Profil gut auf die Achszapfen 16 und 18 auflegen kann.

Während sich die Zinken 64 von einer Tragfläche 68 nach unten erstrecken, erstrecken sich von der Oberseite der Tragfläche 68 Seitenschenkel 70 und 72 nach oben. Diese Seitenschenkel, deren Enden 74 bzw. 76 einfach oder doppelt umgebogen sein können, verbessern die Seitenführung des Trag-und Führungsprofils 62 und die Enden können sich bei nicht aufgeblasenem Schlauch auf die Enden der Schenkel 22 und 24 des U-Profils 14 aufsetzen. In der Mitte der Fläche 68 und deren Oberseite zwischen den Seitenschenkeln 70 und 72 ist eine Kettenführung 78 angeformt, die aus einer im Querschnitt etwa rechteckigen Rippe besteht. Die Rollen 80 des Obertrums 44 der Kette 28 gleiten auf dieser Rippe 78 und die Kettenglieder 82 werden seitlich an der Kettenführung 78 geführt.

An den Zinken 64 sind Noppen 84 vorgesehen, die nach Aufstecken des Trag-und Führungsprofils 62 auf die Achsen 16 und 18 eine Art Schnappsitz erbringen, so daß das Tragund Führungsprofil 62 ohne Kraftanwendung nicht mehr gelöst werden kann. Damit wird eine Transportsicherung erreicht.

Um zu vermeiden, daß bei Anbringen der Achszapfen 16 und 18 in dem U-Profil 14 durch zu starkes Anziehen einer Mutter 86 eine Verformung der Schenkel 22 und 24 des U-Profils 14 eintritt, ist an jedem Achszapfen 16 und 18 eine Buchse 88 vorgesehen, deren Stirnseiten an den Innenseiten der Schenkel 22 und 24 ansteht. Diese Buchsen 88 dienen demnach als Abstandshalter. Aus Fig. 2 sind an dem Achszapfen 16 angeformte Achsstummel 89 bzw. 90 für die Rolle 10 und eine entsprechende Rolle auf der anderen Seite gezeigt.

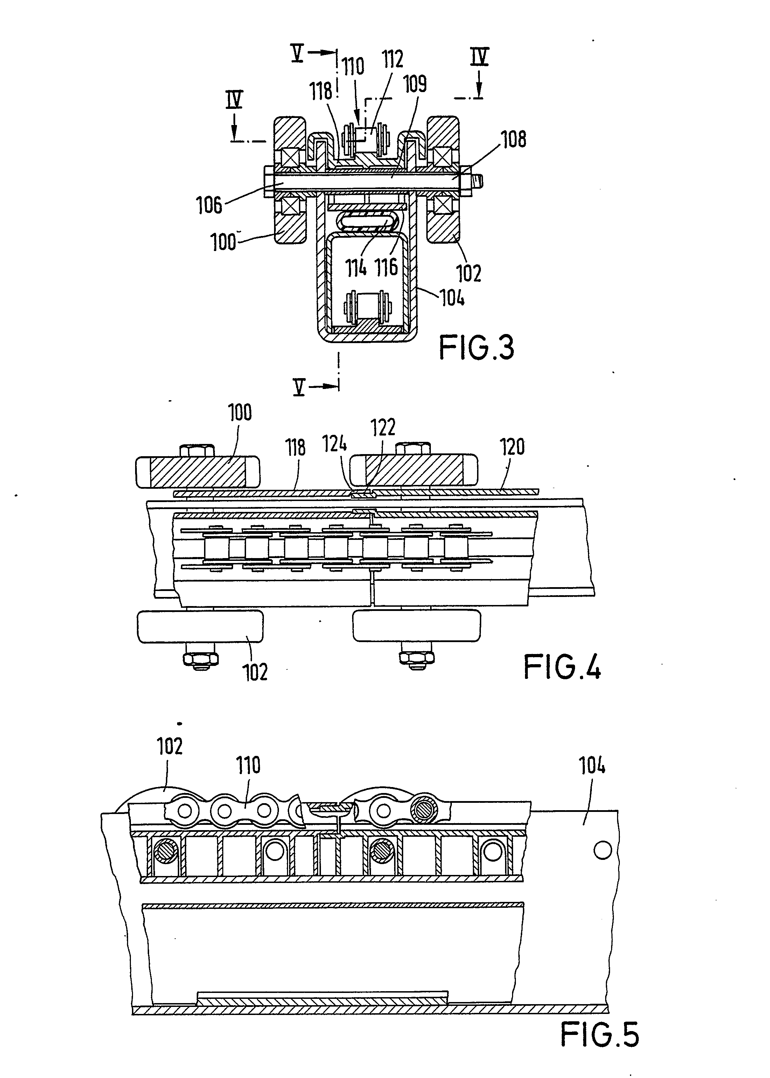

Bei der in den Fig. 3 bis 5 gezeigten Ausführungsform sind anstelle von breiten Rollen Röllchen 100, 102 an den über die Außenseite eines U-Profils 104 stehenden Enden 106 und 108 eines Achszapfens 109 gelagert. In dem U-Profil 104 ist eine Kette 110 geführt und das Obertrum 112 der Kette wird über Schlauchabschnitte 114 angehoben, auf welchen über eine Metallschiene 116 Trag-und Führungsprofile 118 angeordnet sind, die wie bei der Ausführungsform nach den Fig. 1 und 2 mit Zinken ausgebildet sind.

Wie insbesondere aus Fig. 4 und Fig. 5 zu ersehen ist, ist ein Trag-und Führungsprofil 120 an dem Ende 122 verjüngt ausgebildet, während das Trag-und Führungsprofil 118 an dem Ende 124 mit einer inneren Ausnehmung ausgebildet ist, so daß das Ende 122 des Trag-und Führungsprofils 120 in das Ende 124 des Trag-und Führungsprofils 118 eingesteckt werden kann. Dadurch ergibt sich eine lückenlose Anordnung hintereinander vorgesehener Trag-und Führungsprofile. Die weiteren in den Fig. 3 bis 5 gezeigten konstruktiven Einzelheiten entsprechen den in den Fig. 1 und 2 gezeigten.

Die Achszapfen ergeben eine Hubbegrenzung für das Trag-und Führungsprofil, da sich die Metallschiene beim Aufblasen des Schlauchabschnittes an die Unterseite der Achszapfen anlegt und ein weiteres Anheben des Obertrums der Kette verhindert wird.

**Ansprüche**

1. Vorrichtung zur akkumulierenden Förderung von Gütern, mit einer Rollenbahn und mit einer über aufblasbare Schlauchabschnitte mit den zu fördernden Gütern in Angriff bringbare Kette, wobei zwischen der Kette und jedem Schlauchabschnitt ein Trag-und Führungsprofil angeordnet ist und die Kette, die Trag-und Führungsprofile und die Schlauchabschnitte in einem nach oben hin offenen U-Profil angeordnet sind, dadurch **gekennzeichnet**, daß das Trag-und Führungsprofil (62) als Kammprofil ausgebildet ist und daß die Zinken - (64) nach unten zu dem Schlauchabschnitt (42) gerichtet sind.

2. Vorrichtung nach Anspruch 1, dadurch **gekennzeichnet**, daß der Abstand der Zinken (64) gleich ist dem Abstand einer Lochung (26) in den Seitenschenkeln (22, 24) des U-Profils (14) zur Befestigung der Rollen (10, 12).

3. Vorrichtung nach Anspruch 1 oder 2, dadurch **gekennzeichnet**, daß die Zinken (64) doppelwandig ausgebildet sind und daß die Basisflächen (66) zwischen den Zinken (64) ausgerundet sind.

4. Vorrichtung nach einem der Ansprüche 1 bis 3, dadurch **gekennzeichnet**, daß an der den Zinken - (64) gegenüberliegenden Oberfläche der Tragfläche (68) Seitenschenkel (70, 72) angeordnet sind und daß die Enden (74, 76) der Seitenschenkel (70, 72) einfach oder doppelt nach außen abgebogen sind.

5. Vorrichtung nach einem der Ansprüche 1 bis 4, dadurch **gekennzeichnet**, daß an der den Zinken - (64) gegenüberliegenden Oberfläche der Tragfläche (68) in der Mitte eine Kettenführung - (78) angeordnet ist.

6. Vorrichtung nach einem der Ansprüche 1 bis 5, dadurch **gekennzeichnet**, daß an den Enden der Zinken (64) Noppen (84) angeordnet sind.

7. Vorrichtung nach einem der Ansprüche 1 bis 6, dadurch **gekennzeichnet**, daß jedes Trag-und Führungsprofil (118, 120) zur Ausbildung von Überlappungsstößen an einem Ende (122) verjüngt und am anderen Ende (124) mit einer inneren Ausnehmung ausgebildet ist.

8. Vorrichtung nach einem der Ansprüche 1 bis 7, dadurch **gekennzeichnet** , daß die Trag-und Führungsprofile (62) und Kettenführungsprofile - (32) auf der Basis (20) m Inneren des U-Profils - (19) aus Kunststoff, vorzugsweise Nylon, bestehen.

9. Vorrichtung nach einem der Ansprüche 1 bis 8, dadurch **gekennzeichnet**, daß zwischen jedem Trag-und Führungsprofil (62) und dem zugehörigen Schlauchabschnitt (42) eine Metallschiene (60) angeordnet ist, daß an den Enden der Schlauchabschnitte (42) Führungszapfen (52, 58) angeordnet sind, und daß die Führungszapfen (52, 58) zwischen Zinken (64) des Trag-und Führungsprofils - (62) aufgenommen sind.

10. Vorrichtung nach einem der Ansprüche 1 bis 9, dadurch **gekennzeichnet**, daß zur Lagerung der Rollen (10, 12) an dem U-Profil (14) durchgehende Zapfen (16, 18) mit Achsstummeln (89, 90) vorgesehen sind und daß auf den Zapfen (16, 18) im Inneren des U-Profils (14) Abstandsbuchsen (88) angeordnet sind.

FIG.1

FIG.2

FIG.3

FIG.4

FIG.5